# EUROPÄISCHE PATENTANMELDUNG

(11) **EP 1 564 981 A1**
(43) Veröffentlichungstag der Anmeldung: **17.08.2005**
(21) Anmeldenummer: 04290367.4
(22) Anmeldetag: 11.02.2004
(51) Int. Cl.: H04M 11/04

(54) **Ein Leitstellensystem und ein Verfahren zur Migration**

(71) Anmelder: ALCATEL, 75008 Paris (FR)
(72) Erfinder: Engel, Ines, 71679 Asperg (DE); Euler, Helmut, Dr., 75242 Neuhausen (DE); Mager, Norbert, 73207 Plochingen (DE); Weis, Bernd X., Dr., 70825 Korntal-Münchingen (DE)
(74) Vertreter: Brose, Gerhard, Dipl.-Ing.

(57) **Zusammenfassung**

Die Erfindung betrifft Ein Verfahren zur Migration einer Menge von einzelnen Leitstellen die eine Leitstellenfunktionalität gebietsweise bereitstellen, wobei das Verfahren die folgenden Schritte umfasst bereitstellen einer zentralen Leitstelle und übernehmen der gebietsweisen Leitstellenfunktionalität von den einzelnen Leitstellen durch die zentrale Leitstelle, wobei die durch die Leitstellen bereitgestellte gebietsweise Leitstellenfunktionalität gebietsweise von der zentralen Leitstelle übernommen wird und so die zentrale Leitstelle skaliert. Weiterhin betrifft die Erfindung eine zentrale Leitstelle, eine Fernleitstelle, ein Leitstellensystem und ein Computer Software Produkt.

## Beschreibung

Die Erfindung betrifft ein Verfahren zur Migration einer Menge von einzelnen Leitstellen, eine zentrale Leitstelle, eine Fernleitstelle, ein Leitstellensystem und ein Computer Software Produkt.

Im Hause der Berliner Feuerwehr wurde die alte Feuerwehrleitstelle ersetzt. Ende der achtziger Jahre war sie den gestiegenen Einsatzzahlen nicht mehr gewachsen. Eine neue, umfangreichere Leitstelle wurde installiert, die das Ziel hatte, das Einsatzaufkommen von Gesamtberlin bewältigen zu können.

Unter Verwendung von moderner Informations- und Kommunikationstechnik wurde die Effizienz der Berliner Feuerwehr im Hinblick auf das steigende Tätigkeitsfeld gesteigert. Dies ließ sich aber nur durch schnellere, umfangreiche und aktuelle Informationen bewältigen. Das umfasste die Erstellung vollständig neuer Informations-, Kommunikations- und Alarmierungstechnik sowie Berichts- und Abrechnungssysteme. Diese neue Technik wirkt sich nicht nur im Leitstellenbereich, sondern bis hin zu den einzelnen Feuerwehrstandorten aus. Mit der Inbetriebnahme des neuen Gebäudes und der neuen Technik wurde die alte Leitstelle komplett außer Betrieb genommen.

Neben der neuen Leitstelle gibt es eine Ausweichleitstelle und regionale Führungsstellen. Diese Führungsstellen sowie die Dienstgebäude der Feuerwehr sind über ein (Daten-)Netzwerk miteinander verbunden. Dazu wurde jedes anzuschließende Dienstgebäude mit einen sog. Wachrechner ausgerüstet.

In der Leitstelle wurden multifunktionale Arbeitsplätze eingerichtet. Alle Arbeitsplätze sind für die Einsatzbearbeitung jeweils mit einer Workstation. Während ein Monitor der Einsatzbearbeitung dient, kann auf einem zweiten Monitor über ein grafisches Informationssystems ein Stadtplanausschnitt des betr. Einsatzortes angezeigt werden.

Da die Arbeitsplätze mit den Workstations der Einsatzbearbeitung verbunden sind, ist es möglich, die meisten Anwendungen (z.B. Entgegennahme von Notrufen) über Tastatur bzw. Maus vom Bildschirm der Einsatzbearbeitung zu steuern.

Bei Ausfall des Einsatzleitrechners übernimmt ein Rückfallrechner dessen Aufgaben. Für den Arbeitsplatz ergeben sich keinerlei Einschränkungen. Fällt auch dieser Rechner aus, oder ist das Netzwerk gestört, kann über ein zusätzliches Netzwerk auf einem Notserver weitergearbeitet werden. Zusätzlich besteht die Möglichkeit, bei Ausfall der gesamten Datenverarbeitung, den Flachbildschirm zur Steuerung der zentralen Alarmierungsanlage zu nutzen (dann mit Maus und Tastatur).

Die Ausweichleitstelle ist vollständig in das digitale Leitungsnetz integriert und wurde mit einem sog. Abschnittsrechner, 15 Arbeitsplätzen, einer Tellerkommunikations-Anlage und einer gedoppelten EDV-Anlage sowie stationären Funkgeräten ausgerüstet. Der Abschnittsrechner kann bei Ausfall des Einsatzleitrechners der Leitstelle dessen Aufgaben übernehmen und wird auf dem aktuellen Stand gehalten. Die Arbeitsplätze sind mit denen der Leitstelle völlig identisch. Sie können binnen kürzester Zeit aktiviert werden.

Für den Aufbau einer dezentralen Führung, z.B. bei Großschadenslagen, sind an verschiedenen Standorten regionale Führungsstellen eingerichtet. Sie sind voll in das digitale Leitungsnetz integriert und mit je einem Abschnittsrechner, Arbeitsplätzen und stationären Funkgeräten ausgerüstet. Für den Fernsprechbetrieb erhielten sie Nebenstellen der in den Standorten vorhandenen Tellerkommunikations-Anlagen. Eine Funk-Draht-Vermittlungsanlage bzw. ein Zugriff auf die in der Leitstelle ist nicht vorhanden. Die Abschnittsrechner sind mit dem Einsatzleitrechner der Leitstelle verbunden.

Solch ein integriertes Leitstellensystem ist in der Internationalen Patentanmeldung WO 02/089386 A2 beschrieben.

Die Anzahl der täglich eingehenden Notrufe in Baden-Württemberg belaufen sich auf 10.000 Notrufe. Davon haben 8.000 Anrufe Polizeirelevanz, 1.500 sind an die Rettungsdienste und 500 an die Feuerwehr adressiert. Diese Notrufe werden derzeit von einer Vielzahl von Leitstellen entgegengenommen; die daraus resultierenden Einsätze werden nachfolgend betreut.

Die Betriebskosten dieser Vielzahl von Leitstellen sind erheblich. Die finanzielle Situation der jeweiligen Träger ist schwierig. Somit ist eine Reduktion der Kosten unausweichlich.

Es sind Konzeptionen, die Reduzierungen von Leitstellen vorsehen. Eine Reduktion von Leitstellen ist jedoch nur dann möglich, wenn die bisherige Versorgungsqualität sichergestellt werden kann. Außerdem soll eine sozial verträgliche Lösung für das vorhandene Leitstellenpersonal sowie für die ehrenamtlich tätigen Mitbürger gefunden werden.

Ein weiteres Ziel einer neuen Konzeption soll die effizientere Koordinationsmöglichkeit unterschiedlicher Sicherheits- und Rettungsorganisationen sein. Aufgrund der strategischen Lage des Landes Baden-Württemberg sollten auch Kompatibilitätsaspekte mit den angrenzenden Bundesländern aber auch mit den Nachbarländern berücksichtig werden.

Entscheidend ist, dass im Rahmen einer solchen Konzeption ein praktikabler Migrationsweg (von kleinen und mittleren zu Großleitstellen) aufgezeigt wird. Da sich eine solche Migration gegebenenfalls über längere Zeiträume erstrecken kann, müssen während der gesamten Einführungsphase stabile Zwischenzustände gewährleistet werden können.

Das Problem wird durch ein Verfahren zur Migration einer Menge von einzelnen Leitstellen die eine Leitstellenfunktionalität gebietsweise bereitstellen gelöst, durch das Bereitstellen einer zentralen Leitstelle und (schrittweise) Übernehmen der gebietsweisen Leitstellenfunktionalität von den einzelnen Leitstellen durch die zentrale Leitstelle, wobei die durch die Leitstellen bereitgestellte gebietsweise Leitstellenfunktionalität gebietsweise von der zentralen Leitstelle übernommen wird und so die zentrale Leitstelle skaliert. Bevorzugt ist die zentrale Leitstelle modular aufgebaut, wobei ein Modul einen Teil der Leitstellenfunktionalität bereitstellt und das Bereitstellen eines Teils der Leitstellenfunktionalität durch ein Modul und das Übernehmen des Teils der Leitstellenfunktionalität von den einzelnen Leitstellen durch die zentrale Leitstelle modulweise geschieht. Weiter ist es für das Verfahren vorteilhaft, wenn die zentrale Leitstelle von FernLeitstellen fernbedienbar ist die mit der zentrale Leitstelle verbunden sind.

Wie eingangs erwähnt, werden Leitstellenlösungen für unterschiedliche Organisationen benötigt (BOS, Rettungsdienst, Feuerwehr, etc.), was dazu führt, dass die Bedienplätze einer solchen Einrichtung entsprechend der Aufgabenstellung gestaltet werden müssen. Dennoch bestehen eine Vielzahl von Gemeinsamkeiten wie beispielsweise die gebietsweise Unterteilung der Lagepläne, die Darstellung eins Lageplans oder Zustands, die Ortsbezogenheit von Ereignissen wie Unfällen oder Notfällen etc. (zu Gebieten Flächen oder Koordinaten). Die Vielzahl an Interaktionsmöglichkeiten wie zum Beispiel die Annahme eines Notrufs, die Einbringung der Notfallinformation in ein Leitstellensystem, die Meldung eines Aktoren wie beispielsweise eines Polizeieinsatzwagens, dessen Position und Zustand oder die Eigenschaften (Fähigkeiten) eines Feuerwehrgeräts beispielsweise Kapazitäten oder die Länge der Leiter etc. oder die einer Ambulanz wie beispielsweise die medizinische Ausstattung. Die Interaktionsmöglichkeiten umfassen auch die Integration moderner Kommunikationsmittel wie Funksysteme, Telekommunikationsanlagen und Internet einschließlich E-mail. Dabei integriert die Leitstelle die Vielzahl von Informationsflüssen zu einem gebietsweise unterteilbaren Gesamtbild.

Die implizite oder Explizite Ortsbezogenheit von Notruf-Information findet sich auch in automatischen Notrufsystemen wie beispielsweise dem in der Europäischen Patentanmeldung Nr. EP 1 205 730 A1 beschrieben. Diese Ortsbezogenheit findet man ebenfalls in Kommunikationsverfahren für Leitstellen und anderen Objekten, beschrieben in der United States Patent Anmeldung Nr. US 2002/0197988 A1.

Eine vorteilhafteste Architektur für eine zentrale Leitstelle ist eine Zentralisierung der "Intelligenz" auf gesicherte (redundante) Serverplattformen, eine landesweite Vernetzung der Bedienstationen mit den jeweiligen Serverplattformen flexible leicht administrierbare, abgesetzte Bedienstationen. Das Erlaubt sowohl eine Skalierung der Schnittstellen, der Hard- und Software sowie der bereitgestellten Funktionalität. Bei der Integration der Leitstellen zu einem Gesamtsystem können die Standard-Middelware-Ansätze wie Browser Technologie, Java Technologie, Server/Client Architekturen, Applikations-Webserver Integration, Common Object Request Broker Architekturen etc. auf der bewährten Internet Technologie angewendet werden.

Die Vorteile einer solchen Architektur sind in folgenden Aspekten zu sehen. Die Zentralisierung der "Intelligenz" auf "gesicherte" Serverplattformen (Redundanz) ermöglicht eine schnelle, flächendeckende und kostengünstige Einführung neuer Anwendungen und Dienste (Applikationen und Services). Durch eine derartige Konzentration von Applikationen werden umfangreiche Kostenersparnisse ermöglicht.

Beispiele für weitere zentrale Anwendungen sind unter anderem: Fahndungsinformationen, Telemedizin, Internet-Notruf für Randgruppen (Behinderte, Blinde, Taubstumme, etc.), Kontakt Center mit Datenauswertung für Bevölkerungshinweise, Informationsdatenbanken (gefährliche Stoffe, Standorte, Spezialinformationen), Schnittstellen zu Medien (Rundfunk und TV), Satelliteninformationen, etc.

Durch die abgesetzten, flexibel administrierbaren Bedienstationen und deren landesweite Vernetzung kann der Betrieb der Leitstellen in kritischen Situationen (Katastrophe, Terror, etc.) aufrecht erhalten und an die jeweils gegebene Situation angepasst werden. Dies schließt auch den Einsatz von mobilen Befehlsständen ein.

Sämtliche Bedienstationen können einfach an die betrieblichen und organisatorischen Gegebenheiten angepasst werden und zeichnen sich durch ein einheitliches Erscheinungsbild, das dem Bediener - wo immer er sich auch befindet - vertraut ist (common look and feel), aus. Eventuell lassen sich bestehende Bedienstationen an die neue Technik anpassen.

Die Anpassung der Bedienstationen an die jeweilige Aufgabenstellung (Sicherheitsstufen, Zugriffsberechtigungen, Anwendungen, Datenbanken, einsatzrelevante Informationen, etc.) erfolgt mit einfachen administrativen Mitteln über eine geeignete Verwaltungs-Software.

Ein entscheidender Vorteil beim Einsatz einer derartigen Verwaltungs-Software ist die Möglichkeit, dass unterschiedliche Organisationen dieselbe Serverumgebung und Anwendungen autark nutzen. Sie können im Bedarfsfall innerhalb von Sekunden mit anderen Organisationen zusammengeschaltet werden und gemeinsam Daten nutzen und austauschen. Dadurch wird neben einer weiteren Kostenreduktion eine Effizienzsteigerung erreicht. Eine gemeinsame Datenhaltung hilft, Fehler zu vermeiden, und erhöht die Servicequalität.

Der Migrationsweg mit stabilen Zwischenzuständen und die Leitstellen-Architektur ermöglicht eine praktikable Umsetzung der Migration von der heute bestehenden Leitstellenstruktur zu einer kostengünstigen und effizienten Lösung.

Die geforderte Funktionalität steht bereits zu Beginn der Migrationsphase über die zentrale Serverstruktur zur Verfügung. Durch die abgesetzten Bedienstationen der Großleitstelle können die heute bestehenden Leitstellen stufenweise (nach Bedarf) auf das neue Großsystem umgeschaltet werden. Die dazu erforderlichen technischen Aufwendungen sind durch den Einsatz moderner Internet-Technologie gering.

In Zusammenhang mit diesem Umstellungsprozess ist eine Reduktion des Leitstellenpersonals nicht zwingend erforderlich. Die technische Konzeption der Großleitstelle erlaubt ferner den geographisch verteilten Einsatz von Bedienstationen bei logischer Integrität (Bedienpersonal einer logischen Leitstelle muss sich nicht zwingend am selben Ort befinden). Arbeitsplätze können so in strukturschwachen Gebieten aufgebaut werden, sind jedoch mit Hilfe der Leitstellentechnologie integraler Bestandteil der logischen Leitstellen-Mannschaft.

Ein derartiges Leitstellenkonzept bietet ein Höchstmass an Flexibilität. Durch das vorgestellte Migrationskonzept ist eine stufenweise Anpassung an die organisatorische und finanzielle Situation jederzeit gegeben. Die Einführung der neuen Technologie ist entkoppelt von der Frage einer Personalreduktion. Bereits durch die Einführung der Technik an sich ist ein erhebliches Kosten-Einsparungspotential gegeben.

Durch die Verwendung der neuen Möglichkeiten im Bereich von polizeilicher Ermittlung als auch im Rettungswesen entstehen neue Arbeitspotentiale.

Im folgenden wird die Erfindung unter Zuhilfenahme der beiliegenden Zeichnungen weiter erläutert:
Figur 1 zeigt eine Gebietszerlegung in Untergebiete und dessen Telgebiete und Verfeinerungen
Figur 2 zeigt eine vorteilhafte Architektur für das beanspruchte Leitstellensystem
Figur 3 zeigt eine Datenstruktur für die gebietsweise bereitgestellte Leitstellenfunktionalität durch das beanspruchte Leitstellensystem

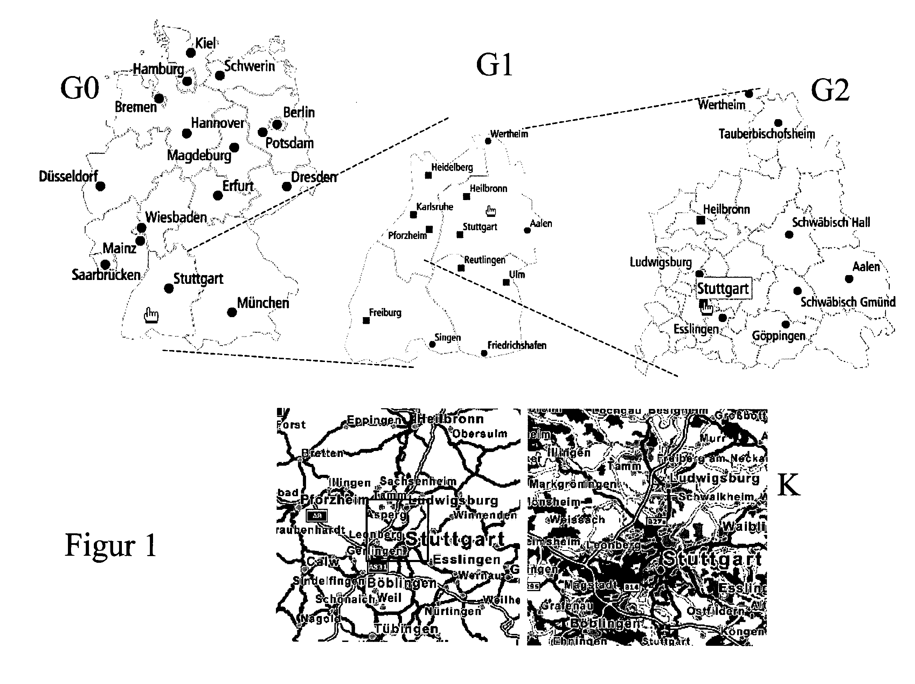

Figur 1 zeigt die Dekomposition von Deutschland G0 in Teilgebiete G1 und deren Unterteilgebiete G2. Diese Dekomposition ermöglicht eine Hierarchische Datenstruktur wie beispielsweise einen Topologiebaum von Ortinformationen. Solche Ortinformationen können zum Beispiel Positionen sein als auch Gebietsinformationen mit Ausdehnung wie die dargestellte Karte. Die Struktur erlaubt weiterhin ein Zoomen und Gebiete zu andern Instanzen wie beispielsweise zuständigen Leitstellen zu assoziieren. Des weiteren unterstützt diese Struktur eine Informationsaggregatikon zu einer Übersicht.

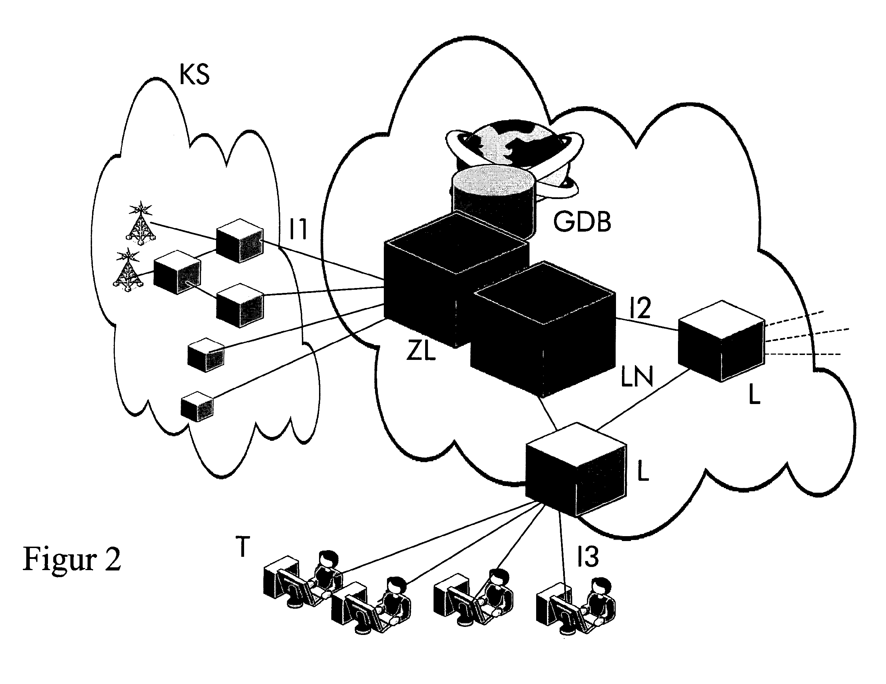

Diese ortsgebundenen Informationen können in der in Figur 2 dargestellten geographischen Datenbank GDB abgelegt werden. Die geographische Datenbank GDB ist mit einer zentralen Leitstelle ZL verbunden. Diese hat Schnittstellen I1 und I2 zu diversen (externen) Kommunikationssystemen KS als auch zu Leitstellen L. Die Leitstellen L, die zentralen Leitstellen ZL und die geographische Datenbank GDB sind durch ein Computernetzwerk, beispielsweise einem privaten virtuellen Netzwerk, verbunden. Die Leitstellen besitzen eine Schnittstelle I3 zu Terminals T.

Die Figur 2 zeigt eine vorteilhafte Ausgestaltung der Erfindung in der die zentrale Leitstelle ZL zu Redundanzzwecken gedoppelt ist. Es sind Datenstrukturen für geometrische Objekte wie zum Beispiel Intervallbäume bekannt die eine Zuordnung von gebieten zu Planungs- und Organisationsinstanzen der zentralen Leitstelle ZL erlauben, und das so, dass die in Figur 1 dargestellte Dekomposition von den Planungs- und Organisationsinstanzen ererbt. Das ermöglicht die einfache (synchronisationsarme) vorteilhafte Parallelisierung oder Verteilung, d.h. die zentrale Leitstelle ZL (und mit ihr das gesamte Leitstellensystem) skaliert.

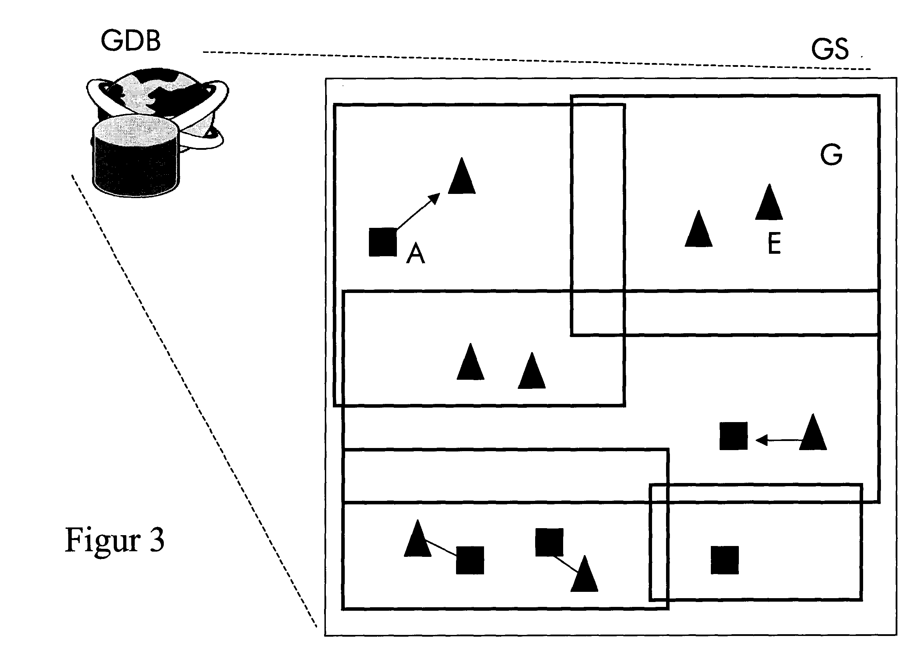

In Figur 3 ist beispielhaft eine Gebietsstruktur GS, die in der geographischen Datenbank GDB abgelegt ist, dargestellt. Sie umfasst durch Rechtecke repräsentierte Gebiete G die ihrerseits Ereignisse E, die durch Dreiecke dargestellt sind, sowie Aktoren A, dargestellt durch schwarze Quadrate.

Die Figur zeigt u.a. dass sich Gebiete überlappen können - was Synchronisation erfordert, da den Gebieten in der zentralen Leitstelle Zuständigkeiten zugeordnet werden - ebenso zu Fernleitstellen. Die Ortinformation von Ereignissen und Aktoren kann auch eine Änderung über der Zeit erfahren, d.h. in der Darstellung können sich Dreiecke und schwarze Quadrate bewegen, was durch die Pfeile dargestellt ist. Weiter können Relationen zwischen Ereignissen und Aktoren, beispielsweise ein Brand und ein Feuerwehrfahrzeug oder auch unter Aktoren, beispielsweise ein koordinierter Polizeieinsatz, als auch unter Ereignissen, beispielsweise viele gehäufte Unfälle auf einer Autobahn ist eine Massenkarambolage.

Die dargestellte Architektur unterstützt das eine kontinuierliche schrittweise fließende Migration von dezentralen Leitstellen zu einem gemeinsamen synergetischen Leitstellensystem mit einer zentralen skalierenden Leitstelle.

## Patentansprüche

1. Ein Verfahren zur Migration einer Menge von einzelnen Leitstellen (L) die eine Leitstellenfunktionalität gebietsweise bereitstellen, wobei das Verfahren die folgenden Schritte umfasst
- bereitstellen einer zentralen Leitstelle (ZL) und
- übernehmen der Leitstellenfunktionalität von den einzelnen Leitstellen durch die zentrale Leitstelle,
**dadurch gekennzeichnet dass** die durch die Leitstellen bereitgestellte gebietsweise Leitstellenfunktionalität gebietsweise von der zentralen Leitstelle übernommen wird und so die zentrale Leitstelle (ZL) skaliert.

2. Das Verfahren nach Anspruch 1, **dadurch gekennzeichnet dass** die zentrale Leitstelle (ZL) modular aufgebaut ist, wobei ein Modul einen Teil der Leitstellenfunktionalität bereitstellt und das Verfahren die weiteren Schritte umfasst
- bereitstellen eines Teils der Leitstellenfunktionalität durch ein Modul
- übernehmen des Teils der Leitstellenfunktionalität von den einzelnen Leitstellen durch die zentrale Leitstelle (ZL) modulweise.

3. Das Verfahren nach Anspruch 1, **dadurch gekennzeichnet dass** die zentrale Leitstelle (ZL) fernbedienbar ist, und das Verfahren den weiteren Schritt umfasst
- verbinden einer Fern-Leitstelle (L) mit der zentrale Leitstelle.

4. Eine zentrale Leitstelle (ZL) zur Bereitstellung von Leitstellenfunktionalität die Interaktionsmittel zur Erfassung und Darstellung von Zuständen und Ereignissen (E) und Speicherungs- und Organisationsmittel zur Planung von Aktoren (A) hat, wobei einem Ereignis (E) und einem Aktor ein Ort zugordnet ist, **dadurch gekennzeichnet dass** die Speicherungs- und Organisationsmittel gebietsweise strukturiert sind.

5. Die zentrale Leitstelle (ZL) nach Anspruch 4, **dadurch gekennzeichnet dass** die Speicherungs- und Organisationsmittel modular strukturiert sind, wobei ein Modul einen Teil der Leitstellenfunktionalität bereitstellt.

6. Die zentrale Leitstelle (ZL) nach Anspruch 4, **dadurch gekennzeichnet dass** die zentrale Leitstelle (ZL) eine Schnittstelle zur Verbindung mit einer Fernleitstelle hat, wobei die Fernleitstelle (L) Interaktionsmittel zur Erfassung und Darstellung von Zuständen und Ereignissen (E) für ein oder mehrere Gebiete (G) bereitstellt und die Schnittstelle (I1, I2, I3) zur Kommunikation von den Zuständen und Ereignissen geeignet ist.

7. Eine Fernleitstelle (L) zur Bereitstellung von Leitstellenfunktionalität, wobei die Fernleitstelle Interaktionsmittel zur Erfassung und Darstellung von Zuständen und Ereignissen hat, **dadurch gekennzeichnet dass** die Fernleitstelle eine Schnittstelle (I2) zur Verbindung mit einer eine zentralen Leitstelle (ZL) hat und die Schnittstelle zur Kommunikation von den Zuständen und Ereignissen (E) für ein oder mehrere Gebiete (G) geeignet ist.

8. Ein Leitstellensystem zur Bereitstellung von Leitstellenfunktionalität für ein Gebiet, wobei das Leitstellensystem Interaktionsmittel zur Erfassung und Darstellung von Zuständen und Ereignissen (E) und Speicherungs- und Organisationsmittel zur Planung von Aktoren (A) hat, und wobei ein Ereignis (E) und einem Aktor (A) ein Ort zugordnet ist, **dadurch gekennzeichnet dass** das Leitstellensystem eine oder mehrere zentrale Leitstellen (ZL) die mit ein oder mehreren Fernleitstellen (L) mittels einem Netzwerk verbunden sind und die Speicherungs-, Darstellungs- und Organisationsmittel sowie die Interaktionsmittel gebietsweise strukturiert sind und gebietsweise den zentralen Leitstellen (ZL) und Fernleitstellen (L) zugeordnet sind.

9. Das Leitstellensystem nach Anspruch 8, **dadurch gekennzeichnet dass** ein zentrale Leitstellensystem die Speicherungs- und Organisationsmittel umfasst und eine Fernleitstelle die Interaktionsmittel umfasst.

10. Ein Computer Software Produkt zur Realisierung eines Leitstellensystems nach Anspruch 8.
